# FASCICULE DE BREVET EUROPEEN

(11) **EP 1 897 212 B1**
(45) Date de publication et mention de la délivrance du brevet: **26.02.2014**
(21) Numéro de dépôt: 06778941.2
(22) Date de dépôt: 15.06.2006
(51) Int. Cl.: H02K 15/04

(54) **ENROULEMENT DE PHASE POUR UN STATOR DE MACHINE ELECTRIQUE TOURNANTE ET STATOR EQUIPE D'UN TEL ENROULEMENT DE PHASE**
PHASENWICKLUNG FÜR DEN STATOR EINER ELEKTRISCHEN ROTATIONSMASCHINE UND STATOR DAMIT
PHASE WINDING FOR A ROTATING ELECTRICAL MACHINE STATOR AND STATOR EQUIPPED WITH SAME

(30) Priorité: 30.06.2005 FR 0551842
(43) Date de publication de la demande: 12.03.2008
(73) Titulaire: VALEO EQUIPEMENTS ELECTRIQUES MOTEUR, 94046 Créteil (FR)
(72) Inventeur: BODIN, Denis, F-62280 Saint Martin Boulogne (FR); CHOCHOY, Jean-Pierre, F-62240 Cremarest (FR); DEFEBVIN, Alain, F-62630 Cormont (FR); JAZE, Michel, F-62630 Frencq (FR)
(74) Mandataire: de Lambilly Delorme, Marie Pierre
(86) Numéro de dépôt international: PCT/FR2006/050563
(87) Numéro de publication internationale: WO 2007/003834

(56) Documents cités:
- EP-A2- 0 274 696
- US-A- 4 857 787
- US-A- 4 908 541
- US-A- 6 166 461
- US-A1- 2004 119 361
- US-B2- 6 614 141

## Description

L'invention concerne un stator de machine électrique tournante qui comporte plusieurs enroulements de phase et un enroulement de phase pour un tel stator.

L'invention concerne plus particulièrement un stator de machine électrique tournante, notamment alternateur ou alterno-démarreur pour véhicule automobile, comportant :
- un corps cylindrique annulaire comoportant des encoches axiales qui débouchent axialement dans les parois d'extrémité axiales avant et arrière du corpus et qui sont ouvertes radialement dans la paroi cylindrique interne du corps ;
- au moins un enroulement de phase qui comporte des spires ondulées de fil qui comportent une série de brins axiaux qui sont reçus dans une série d'encoches associées et des brins de liaisons qui relient les brins axiaux successifs en s'étendant alternativement en saillie par rapport à la paroi d'extrémité axiale arrière et en saillie par rapport à la paroi d'extrémité axiale avant ;
- au moins un enroulement de phase comporte une première demi-phase externe formant une première strate externe de spires qui est reçue en fond d'encoche, et une deuxième demi-phase interne formant une deuxième strate interne de spires qui sont superposées radialement, les brins de liaison de la première demi-phase externe formant des chignons externes et les brins de liaison de la deuxième demi-phase interne formant des chignons internes, les chignons internes et externes s'étendant axialement en saillie par rapport aux parois d'extrémités axiales avant et arrière du corps.

On connaît déjà des stators de ce type, par exemple par le document FR-A-2.819.118.

De manière générale, le nombre d'encoches que comporte un stator est égal à trois fois le nombre d'enroulements de phase multiplié par le nombre de pôle du rotor.

Ainsi, pour un stator qui comporte trois enroulements de phase, dit stator "triphasé", et qui comporte douze pôles, le corps du stator comporte trente-six encoches, et chaque enroulement de phase est reçu dans une série de douze encoches. Deux encoches consécutives d'une série sont agencées de manière à conserver entre elles deux encoches adjacentes libres, chaque encoche libre appartenant à une autre série d'encoches qui est associée à une autre phase.

Lors du montage de chaque enroulement de phase dans le corps du stator, les brins axiaux de chaque enroulement de phase sont insérés dans les encoches de la série associée d'encoches à travers les rainures axiales ouvertes dans la .paroi cylindrique interne du corps de stator.

L'insertion de chaque enroulement de phase ne doit pas être gêné par les chignons des autres enroulements de phase. Les chignons sont donc repoussés radialement vers l'extérieur pour libérer de l'espace axialement en vis-à-vis des orifices débouchant des encoches dans les parois d'extrémités axiales.

Cependant, certains stators comportent un corps qui comportent un plus grand nombre d'encoches dont chacune a une taille réduite.

C'est le cas des stators triphasés comportant seize pôles. Le corps du stator comporte alors quarante-huit encoches.

C'est aussi le cas d'un stator comportant six enroulements de phase, dit stator "hexaphasé". Dans ce type de stator la largeur transversale des encoches est sensiblement divisée par deux par rapport aux encoches d'un stator triphasé à douze pôles de même diamètre.

De plus, le nombre de chignons est multiplié par deux. Il devient alors difficile d'insérer un enroulement de phase sans être gêné par les chignons des autres enroulements de phase.

Le document US 6614141 B2 décrit un stator avec un enroulement selon le préambule des revendications 1 et 7 et une methode de fabrication d'un tel stator ainsi qu'un alternateur dans lequel un tel stator est monté.

Le document EP 0 274 960 A2 décrit un stator bobiné de machine tournante électrique, son procédé de bobinage, et le dispositif pour la mise en oeuvre de ce procédé.

L'invention propose donc un stator du type décrit précédemment, selon la revendication 1.

Selon d'autres caractéristiques de l'invention :
- la hauteur axiale en saillie des chignons internes et des chignons externes est telle que les chignons sont repliés radialement vers la périphérie externe du corps de stator de manière à dégager les extrémité axiale débouchantes des encoches intermédiaires qui ne font pas partie de la série d'encoches associées audit enroulement ;
- la hauteur axiale en saillie des chignons externes est sensiblement égale à la hauteur axiale des chignons internes augmentée d'une hauteur globalement égale à l'épaisseur radiale occupée par les brins axiaux de la demi-phase externe dans chaque encoche associée ;
- le stator comporte six enroulements de phase, et deux encoches successives de chaque série étant espacées de cinq encoches intermédiaires adjacentes ;
- le stator comporte trois enroulements de phase, et deux encoches successives de chaque série étant espacées de deux encoches adjacentes.

L'invention concerne aussi un enroulement de phase destiné à être monté par déformation axiale sur un corps de stator pour l'obtention d'un stator selon les enseignements de l'invention, du type dans lequel l'enroulement de phase comporte une superposition axiale de spires en forme d'étoiles régulières, chaque spire comportant des brins radiaux de même longueur et des brins de liaison transversaux internes et externes, du type dans lequel les brins radiaux sont destinés à être reçus dans les encoches axiales du corps de stator pour former les brins axiaux de l'enroulement monté, tandis que les brins de liaison transversaux sont destinés à former les chignons de l'enroulement monté, et du type dans lequel l'enroulement de phase comporte une premier demi-phase arrière, formant une strate arrière de spires, et une deuxième demi-phase avant formant une strate avant de spires, la demi-phase avant étant destinée à former la demi-phase externe de l'enroulement monté et la demi-phase arrière étant destinée à former la demi-phase interne de l'enroulement monté, caractérisé en ce que la longueur de fil de chaque spire de la demi-phase arrière est plus grande que la longueur de fil de chaque spire de la demi-phase avant.

Selon d'autres caractéristiques de l'enroulement de phase selon l'invention :
- la longueur de fil de chaque spire de la demi-phase arrière est plus grande de 2% à 10% par rapport à la longueur de fil de chaque spire de la demi-phase avant ;
- la longueur de fil de chaque spire de la demi-phase arrière est égale à la longueur de fil de chaque spire de la demi-phase avant globalement augmentée de l'épaisseur axiale de la demi-phase avant multipliée par le nombre de brins radiaux ;
- la longueur de chaque brin radial de chaque spire de la demi-phase arrière est égale à la longueur d'un brin radial d'une des spires de la demi-phase avant augmentée de l'épaisseur axiale de la demi-phase arrière ;
- le contour en étoile de la demi-phase avant est décalé angulairement autour de l'axe central par rapport au contour en étoile de la demi-phase arrière de manière que les branches de l'étoile supérieure s'étendent radialement entre deux branches de l'étoile inférieure ;
- les deux demi-phases sont enroulées en sens inverse l'une par rapport à l'autre.

D'autres caractéristiques et avantages apparaîtront au cours de la lecture de la description détaillée qui va suivre pour la compréhension de laquelle on se reportera aux dessins annexés parmi lesquels :
- la figure 1 est une vue de dessus qui représente un corps de stator déjà connu qui est destiné à recevoir des enroulements de phase ;
- la figure 2 est une vue en perspective à grande échelle qui représente un secteur de corps de stator de la figure 1 dans lequel un enroulement de phase réalisé selon l'état de la technique a été monté ;
- la figure 3 est une vue en coupe selon le plan de coupe 3-3 de la figure 2 qui représente deux chignons de l'enroulement de phase avant qu'ils ne soient repoussés radialement ;
- la figure 4 est une vue en perspective qui représente l'enroulement de phase de la figure 2 avant son montage sur le corps de stator de la figure 1 qui est conforme à l'état de la technique ;
- la figure 5 est une vue de dessus en éclaté qui représente les deux demi-phases de l'enroulement de phase de la figure 2 avant montage qui est conforme à l'état de la technique ;
- la figure 6 est une vue de dessus qui représente l'enroulement de phase selon l'état de la technique dans lequel les deux demi-phase sont superposées axialement ;
- la figure 7 est une vue similaire à celle de la figure 3 dans laquelle le chignon externe a été repoussé radialement contre la culasse du corps de stator ;
- la figure 8 est une vue similaire à celle de la figure 3 dans laquelle les chignons externe et interne ont été repoussés radialement contre la culasse du corpus de stator ;
- la figure 9 est une vue de dessus en éclaté qui représente les deux demi-phase d'un enroulement de phase avant montage dans le corps de stator de la figure 1 qui est réalisé selon les enseignements de l'invention ;
- la figure 10 est une vue de dessus qui représente l'enroulement de la figure 9 dans lequel les -deux demi-phases sont superposées axialement ;
- la figure 11 est une vue de dessus qui représente un secteur d'un corps de stator dans lequel l'enroulement de la figure 10 a été monté et dans lequel les chignons de l'enroulement de phase ont été repoussés radialement vers l'extérieur ;
- la figure 12 est une vue en coupe selon le plan de coupe 12-12 de la figure 11 qui repésente deux chignons de l'enroulement de phase avant qu'ils ne soient repoussés radialement vers l'extérieur ;
- la figure 13 est une vue similaire à celle de la figure 12 dans laquelle l'un des chignons a été repoussé radialement vers l'extérieur ;
- la figure 14 est une vue similaire à celle de la figure 7 dans laquelle les deux chignons ont été repoussés radialement vers l'extérieur.

Par la suite, des éléments identiques, similaires ou analogues seront désignés par des mêmes numéros de référence.

On adoptera pour la suite de la description et de manière non limitative une orientation axiale qui est dirigée d'arrière en avant comme indiquée par la flèche "F" des figures.

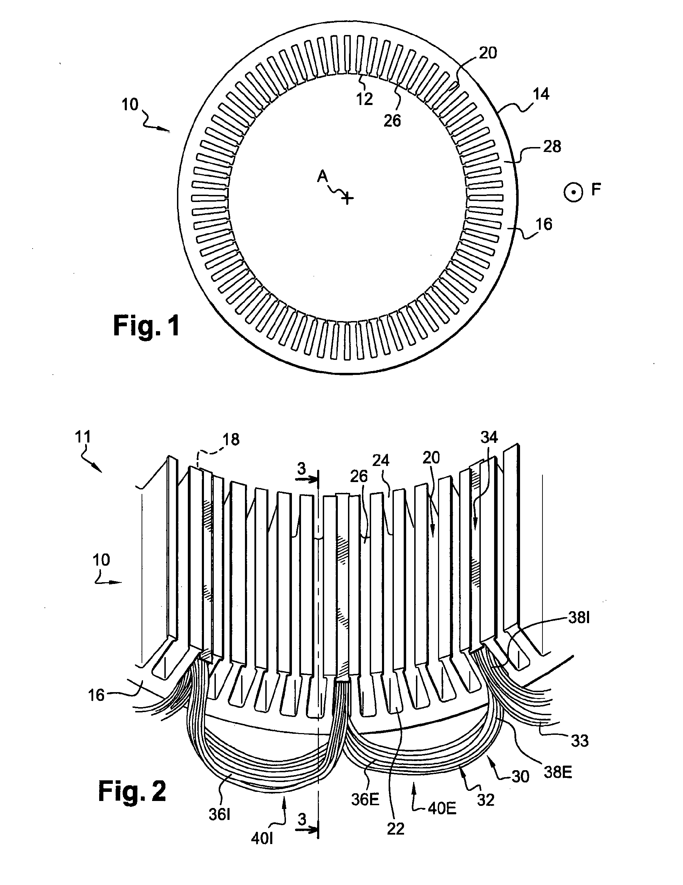

On a représenté à la figure 2 un stator 11 de machine électrique tournante réalisé selon l'état de la technique qui comporte principalement un corps de stator 10 dans lequel sont montés plusieurs enroulements de phase 30.

Pour simplifier la compréhension des figures, on a représente le stator 11 avec un seul enroulement de phase 30, cependant, un tel stator 11 comporte six enroulements de phase qui sont analogues à celui qui est représenté à la figure 2.

On a représente à la figure 1 le corps de stator 10 du stator 11 de machine électrique tournante. La machine tournante est par exemple un alternateur ou un alterno-démarreur. Cette machine est de préférence destinée à être mise en oeuvre dans un véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile. Un tel alterno-démarreur est décrit par exemple dans le document WO-A-01/69762 auquel on se reportera pour plus de précisions.

Le corps de stator 10 a une forme cylindrique annulaire d'axe "A".

Par la suite, des orientations dirigées de manière orthogonales à l'axe "A" et sécantes avec l'axe "A" seront qualifiées d'orientations radiales. Des orientations orthogonales à la fois à l'axe "A" et à une orientation radiale seront qualifiées d'orientations transversales.

Le corps de stator 10 est délimité radialement par une paroi cylindrique interne 12 et par une paroi cylindrique externe 14, et il est délimité axialement par une paroi radiale d'extrémité axiale avant 16 et par une paroi radiale d'extrémité axiale arrière 18.

Le corps 10 comporte des encoches axiales 20 qui débouchent axialement dans les parois radiales d'extrémité axiales avant 12 et arrière 14 -du corpus 10 par l'intermédiaire d'orifices axiaux avant 22 et arrière 24.

La largeur transversale des encoches 20 est inférieure à leur longueur radiale.

Les encoches 20 sont ouvertes radialement dans la paroi cylindrique interne 12 du corps 10 par l'intermédiaire d'une rainure axiale 26 qui s'étend depuis la paroi radiale avant 16 jusqu'à la paroi radiale arrière 18. La largeur transversale de chaque rainure axiale 26 est inférieure à la largeur de l'encoche 20 associée.

Les encoches 20 sont toutes identiques et elles sont par exemple au nombre de soixante-douze. Elles sont réparties angulairement de manière régulière autour de l'axe "A" du corps 10.

La portion annulaire externe pleine du corps 10 dans laquelle les encoches 20 ne s'étendent pas, est appelée culasse 28.

Comme représenté à la figure 2, pour former le stator 11, des enroulements de phase 30 sont montés dans le corps de stator 10.

L'invention sera décrite en référence à un stator comportant six enroulements de phase 30, aussi appelé stator "hexaphasé".

L'invention est cependant applicable à des stators comportant un nombre différent d'enroulements de phase, et notamment à des stators "triphasés" comportant trois enroulements de phase 30. Le corps de stator 10 comporte alors par exemple trente-six ou quarante-huit encoches 20.

Chaque enroulement de phase 30 comporte des spires ondulées 32 formées par un fil 33 conducteur d'électricité.

Selon une variante de l'invention, chaque enroulement de phase 30 comporte des spires ondulées 32 qui sont formées par un faisceau d'au moins deux fils conducteurs.

Ainsi, comme représenté à la figure 2, chaque enroulement de phase 30 comporte des spires ondulées 32 de fil 33 qui comportent une série de brins axiaux 34 qui sont reçus dans une série d'encoches associées 20.

Des brins de liaisons 36 d'orientations globalement transversales qui relient les brins axiaux successifs 34 s'étendent alternativement en saillie par rapport à la paroi d'extrémité axiale arrière 18 et en saillie par rapport à la paroi d'extrémité axiale ayant 16.

Comme représenté à la figure 2, les encoches 20 de la série d'encoches reçoivent les brins axiaux 34 des spires 32 constituant un enroulement de phase 30. Chaque brin axial 34 est apte à être introduit dans l'encoche 20 associée par l'intermédiaire de la rainure axiale 26 comme cela sera décrit par la suite.

Chaque série d'encoches est associée à un des six enroulements de phase 30. Deux encoches consécutives 20 d'une série d'encoches 20 sont séparées par des encoches adjacentes 20 correspondant chacune à une autre série d'encoches 20 associée à l'un des cinq autres enroulements de phase 30.

Ainsi, pour un stator hexaphasé comme c'est le cas à la figure 2, cinq encoches adjacentes sont laissées fibres entre deux encoches 20 de chaque série. En d'autres termes les fils 33 d'un enroulement sont insérés dans une encoche 20 sur six encoches adjacentes 20.

Ainsi pour un stator comportant N enroulements de phases 30, les brins axiaux 34 d'une spire 32 sont reçus dans une encoche 20 sur N encoches adjacentes 20.

Chaque enroulement de phase 30 du stator 11 comporte une première demi-phase externe 38E formant une première strate externe de spires 32 et une deuxième demi-phase interne 38I formant une deuxième strate interne de spires 32. Les brins axiaux 34 de la demi-phase externe 38E sont superposés radialement avec les brins axiaux 34 de la demi-phase interne 38I, comme représenté à la figure 2.

Les brins de liaison 36E de la première demi-phase externe 38E forment des chignons externes 40E et les brins de liaison 36I de la deuxième demi-phase interne 38I forment des chignons internes 401. Les chignons internes 40I et externes 40E s'étendent axialement en saillie par rapport aux parois d'extrémités axiales avant 16 et arrière 18 du corps de stator 10.

Les chignons 401 de la demi-phase interne 381 s'étendent selon une direction axiale alternativement depuis les parois radiales avant 16 et arrière 18 du corps 10 formant ainsi des premières couronnes avant et arrière.

Les chignons de la demi-phase externe 38E s'étendent selon une direction axiale alternativement depuis les parois radiales avant 16 et arrière 18 du corps 10 formant des deuxièmes couronnes avant et arrière.

Les deux demi-phases 38E, 38I sont ondulées en opposition. Ainsi les deuxièmes couronnes ont un diamètre plus faible que les premières couronnes, et elles sont décalées angulairement par rapport à ces premières couronnes autour de l'axe "A".

Ce type d'enroulement de phase 30 est aussi connu sous le nom "ondulé réparti".

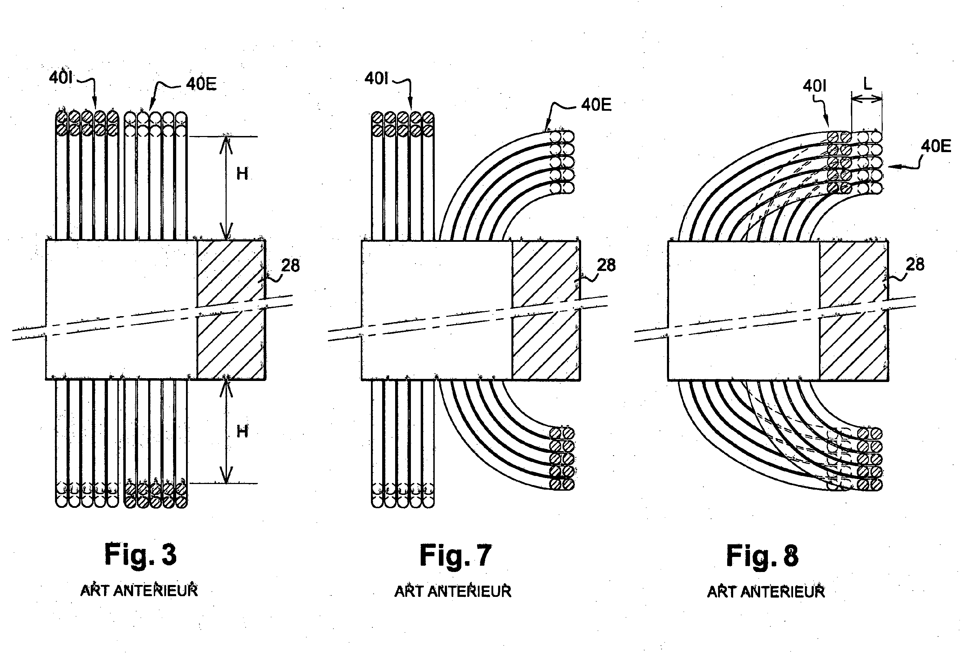

Comme représenté à la figure 3 et de manière connue, chacun des chignons 40E, 40I de chaque demi-phase 38E, 38I s'étend en saillie par rapport à la paroi radiale avant 16 ou arrière 18 d'une hauteur axiale "H" sensiblement identique.

Pour la suite de la description, on définit la hauteur axiale "H" d'un chignon 40E, 40I comme étant la distance axiale entre la paroi radiale du corps 10 depuis laquelle s'étend axialement le chignon 40E, 401 et le point le plus éloigné de la voûte interne formée par le chignon 401, 40E.

Un procédé connu d'insertion des enroulements de phase 30 dans le corps du stator 10 est décrit succinctement par la suite. Une description détaillée d'un tel procédé d'insertion est par exemple décrite en détail dans le document FR-A-2.846.481, notamment aux pages 8 à 11 de ce document.

Pour distinguer un enroulement de phase avant montage sur le corps de stator 10 d'un enroulement de phase monté sur le corps de stator 10, l'enroulement de référence avant montage aura le numéro de référence 50 tandis que le même enroulement de phase monté aura le numéro de référence 30.

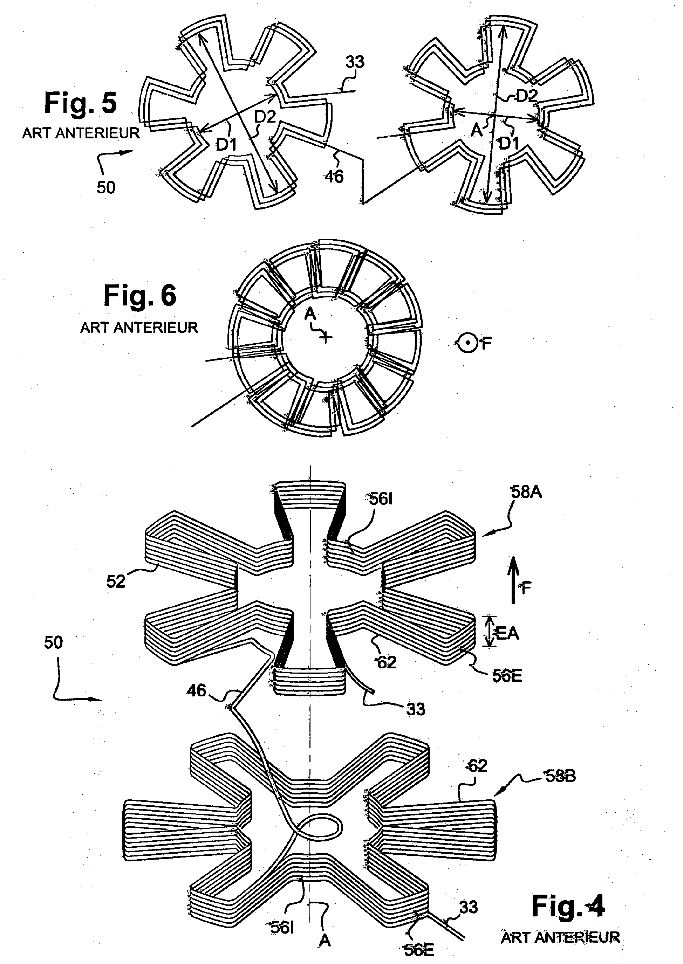

On a représenté à la figure 4 un enroulement de phase 50 avant son montage dans les encoches 20 du corps de stator 10. Cet enroulement de phase non monté 50 est déjà connu et permet d'obtenir un stator 11 connu tel que décrit précédemment.

L'enroulement de phase non monté 50 est ici réalisé à partir d'un fil 33 conducteur d'électricité tel qu'un fil de cuivre. L'enroulement de phase 50 comporte un axe qui est coaxial à l'axe "A" du corps de stator 10.

Cet enroulement de phase non monté 50 comporte des demi-phases avant 58A et arrière 58B qui sont représentées à la figure 3. Ces demi-phases avant 58A et arrière 58B correspondent respectivement aux demi-phases externe 38E et interne 38I de l'enroulement de phase 30 monté.

Chaque demi-phase 58A, 58B comprend une superposition de spires planes 52 identiques en forme d'étoiles régulière d'axe "A". Les spires 52 d'une même demi-phase 58A, 58B se superposent parfaitement.

Comme représenté à la figure 3, les spires 52 de la demi-phase avant 58A sont enroulées dans un premier sens horaire tandis que les spires 52 de la demi-phase arrière 58B sont enroulées dans un deuxième sens anti-horaire.

Chaque spire 52 d'une demi-phase 58A, 588 comporte une pluralité de brins radiaux 62 de même longueur -qui sont orientés sensiblement radialement par rapport à l'axe "A". Les brins radiaux 62 sont en nombre pair, ils sont plus particulièrement ici au nombre de douze.

Les brins radiaux 62 sont reliés alternativement entre eux par des brins de liaison transversaux internes 56I et externes 56E de manière que des paires de deux brins radiaux 62 successifs forment les branches d'une étoile régulière qui comporte ici six branches.

Les brins radiaux 62 sont destinés à constituer les brins axiaux 34 de l'enroulement de phase 30 monté, tandis que les brins transversaux internes 56I et externes 56E sont destinés à constituer les brins transversaux 36E, 36I des chignons 40E, 40I de l'enroulement de phase 30 monté.

Comme représenté à la figure 5, la longueur radiale des brins radiaux 62 est sensiblement supérieure à la longueur axiale de chaque encoche 20 du corps de stator 10.

Les brins transversaux internes 56I s'étendent sur un cercle interne imaginaire qui est centré sur l'axe "A" et qui a un diamètre "D1" sensiblement inférieur au diamètre interne du corps de stator 10.

Les brins transversaux externes 56E s'étendent globalement sur un cercle externe imaginaire qui est centré sur l'axe "A" et qui a un diamètre "D2" sensiblement supérieur au diamètre interne du corps de stator 10.

Les deux demi-phase 58A, 58B sont reliées électriquement entre elles par un fil de liaison 46.

Avantageusement, les deux demi-phases 58A, 58B et le fil de liaison 46 sont constitués par un unique fil 33 ou par un unique faisceau d'au moins deux fils en parallèle.

Comme représenté à la figure 6, la demi-phase avant 58A est plaquée à l'avant de la demi-phase arrière 58B. Les axes de symétries des deux demi-phases 58A, 58B sont coaxiaux avec l'axe "A" du corps de stator 10, de telle sorte que la demi-phase avant 58A est décalée axialement vers l'avant relativement à la demi-phase arrière 58B.

La demi-phase arrière 58B forme ainsi une strate arrière de spires 52 tandis que la demi-phase avant 58A forme une strate avant de spires 52.

Comme représenté à la figure 6, les spires 52 de la demi-phase avant 38Ea sont décalées angulairement autour de l'axe "A" relativement aux spires 32a de la demi-phase arrière 38Ia, chaque branche de la demi-phase avant 38Ea étant ainsi intercalée angulairement entre deux branches de la demi-phase arrière 38Ia.

Cet enroulement de phase 50 est ensuite monté par déformation sur le corps de stator 10 en mettant en oeuvre le procédé de montage qui comporte notamment les étapes suivantes.

Lors d'une première étape d'agencement, l'enroulement de phase 50 est agencé contre la paroi radiale arrière 22 du corps de stator 10, les spires 52 en étoile étant coaxiales à l'axe "A" du corps de stator 10 et s'étendant dans des plans sensiblement perpendiculaires à cet axe "A".

La demi-phase avant 58A est positionnée relativement plus près de la paroi radiale arrière 18 que la demi-phase arrière 58B. Une portion de chaque brin radial 62 des spires 52 est disposée en vis-à-vis d'une encoche 20 associée.

Lors d'une deuxième étape d'insertion par déformation, les demi-phases avant 58A et arrière 58B sont insérées dans les encoches 20, par torsion progressive des brins radiaux 62 des spires 52 axialement d'arrière en avant et par basculement simultané de tous les brins radiaux 62 vers une direction parallèle à l'axe "A".

Cette déformation est par exemple obtenue en faisant coulisser axialement d'arrière en avant un bloc d'insertion (non représenté) à l'intérieur du corps de stator 10 de manière que, lors de son mouvement de coulissement, le bloc d'insertion appuie contre les brins transversaux internes 54I pour provoquer le basculement des brins radiaux 62.

Les brins radiaux 62 de chaque spire 52 s'étendent au départ dans un plan radial perpendiculaire à l'axe "A". Lors de leur basculement, chaque brin radial 62 est inséré dans l'encoche 20 qui se trouve en regard par l'intermédiaire de la rainure axiale 26.

Les brins radiaux 62 sont alors insérés dans les encoches 20 sur quasiment toute leur longueur. En position montée dans le corps de stator 10, les brins radiaux 62 ont alors une orientation axiale. Ces brins radiaux 62 correspondent alors aux brins axiaux 34 du stator 11.

Les brins axiaux 34 de la demi-phase externe 38E, correspondant aux brins radiaux 62 de la demi-phase avant 58A, sont alors agencé radialement au fond de chaque encoche 20, à proximité de la culasse 28 du corps de stator 10, tandis que les brins axiaux 34 de la demi-phase interne 38I, correspondant aux brins axiaux 62 de la demi-phase carrière 58B, sont agencés radialement à proximité de la rainure axiales 26.

De même, les brins transversaux internes 56I des spires 52 forment alors les chignons 40E, 40I qui sont en saillie par rapport à la paroi radiale avant 16 du corps de stator 10, et les brins transversaux externes 56E des spires 52 forment alors les chignons 40E, 401 qui sont en saillie par rapport à la paroi radiale arrière 18 du corps de stator 10.

Les étapes de montage sont ensuite répétées pour les autres phases du stator.

Comme représenté aux figures 7 et 8, pour permettre l'insertion des autres phases, les chignons 40E, 40I de l'enroulement de phase montée 30 sont repoussés radialement vers l'extérieur pour dégager les orifices axiaux 22, 24 des encoches libres 20 qui ne font pas partie de la série d'encoches 20 associée à cet enroulement de phase 30.

Les boucles des chignons 40E, 40I s'étendent alors dans un plan sensiblement radial par rapport à l'axe "A". de manière à encadrer les orifices axiaux 22, 24 des encoches 20 dans les deux direction transversales et dans une direction radiale vers l'extérieur.

Cette opération permet de dégager les orifices axiaux 22, 24 des encoches 20 de manière à ne pas gêner l'insertion des autres phases, et notamment de manière à ne pas interférer avec les chignons 40E, 401 des autres phases.

Cependant, avant repoussage, les chignons extérieurs 40E ont sensiblement la même hauteur axiale que les chignons intérieurs 40I. Une partie de la hauteur axiale "H"-des chignons extérieurs 40E est donc superflue, c'est-à-dire qu'en position repoussée, comme représenté aux figures 7 et 8, les chignons externes 40E dépassent radialement d'une longueur "L" par rapport à aux chignons internes repoussées radialement. Ceci entraîne une dépense inutile de fil et un encombrement inutile des chignons extérieurs 40E.

L'invention propose donc un enroulement de phase 30 qui, lorsqu'il est monté dans le corps de stator 10 permet d'obtenir un stator 11 dans lequel la hauteur axiale des chignons extérieurs 40E est inférieure à la hauteur axiale des chignons intérieurs 40I.

Pour obtenir un tel stator, l'invention propose un enroulement de phase non monté 50 dans lequel la longueur de fil 33 de chaque spire 52 de la demi-phase arrière 58B soit plus grande que la longueur de fil 33 de chaque spire 52 de la demi-phase avant 58A.

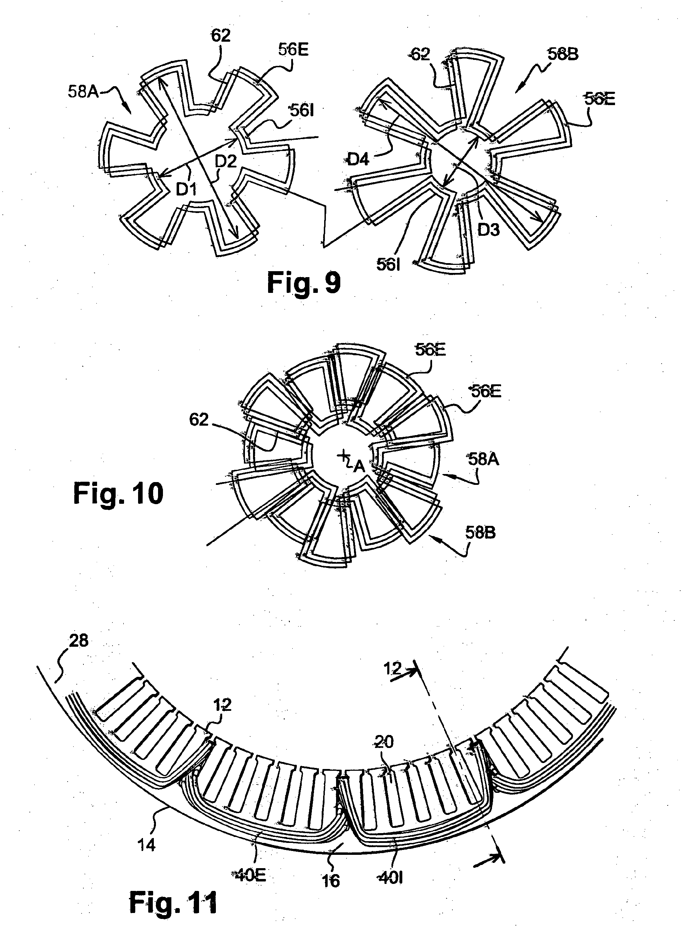

Ainsi, on a représenté aux figure 9 et 10 un enroulement de phase 50 avant son montage dans le corps de stator 10. Cet enroulement de phase 50 non monté est réalisé selon les enseignements de l'invention.

Pour chaque demi-phase 58A, 58B, les brins radiaux 62 ont une longueur identique. Cependant, les -brins radiaux 62 de la demi-phase arrière 58B sont plus long que les brins radiaux 62 de la demi-phase avant 58A.

Plus particulièrement, la longueur des brins radiaux 62 de la demi-phase arrière 58B est telle que les brins transversaux internes 56I de la demi-phase arrière 58B sont agencées sur un cercle interne centré sur l'axe "A" dont le diamètre "D3" est inférieur au diamètre "D1" du cercle interne sur lequel s'étendent les brins transversaux internes 561 de la demi-phase avant 58A.

De plus, les brins transversaux externes 56E de la demi-phase arrière 58B sont agencées sur un cercle centré sur l'axe "A" dont le diamètre "D4" est supérieur au diamètre "D2" du cercle sur lequel s'étendent les brins transversaux externes 56E de la demi-phase avant 58A.

Ainsi, comme représente à la figure 10, les brins radiaux 62 de la demi-phase arrière 588 dépassent radialement vers l'intérieur et vers l'extérieur par rapport aux brins radiaux 62 de la demi-phase avant 58A.

Plus particulièrement, la longueur des brins radiaux 62 de la demi-phase arrière 58B de l'enroulement de phase 30 est ici égale à la longueur des brins radiaux 62 de la demi-phase avant 38E augmentée de l'épaisseur radiale "ER" que les brins axiaux 34 occuperont dans une encoche associée 20 lorsque l'enroulement de phase 50 sera montée dans le corps de stator 10.

Cette épaisseur radiale "ER" correspond globalement à l'épaisseur axiale "EA" occupée par les brins radiaux 62 de la demi-phase avant 56A de l'enroulement de phase 50 avant sont montage dans le corps de stator 10.

Autrement dit, la longueur de fil 33-de chaque spire 52 de la demi-phase arrière 58B est sensiblement égale à la longueur de fil 33 de chaque spire 52 de la demi-phase avant 58A globalement augmentée de l'épaisseur axiale de la demi-phase avant 58A multipliée par le nombre de brins radiaux 62.

Par exemple, la longueur de fil 33 de chaque spire 52 de la demi-phase arrière 58B est plus grande de 2% à 10% par rapport à la longueur de fil de chaque spire 52 de la demi-phase avant 58A.

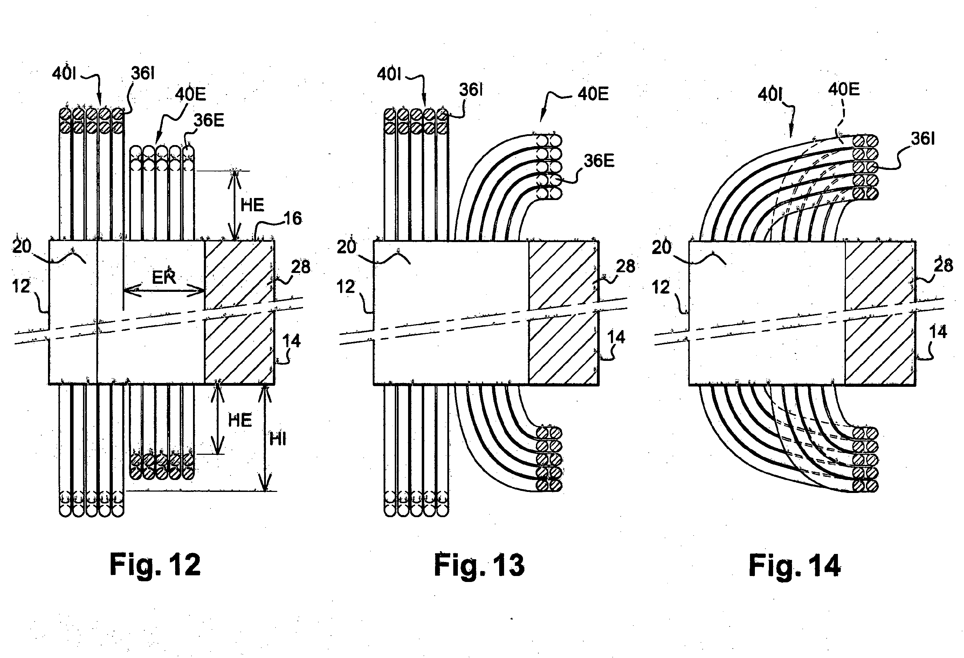

Comme représenté à la figure 13, lorsqu'un enroulement de phase 50 réalisé selon les enseignements de l'invention est montré sur le corps de stator 10, les chignons internes 40I ont une hauteur axiale "HI" plus grande que la hauteur axiale "HE" des chignons externes 40E. Cette hauteur axiale "HE" supérieure du chignon externe 40E est conférée par la plus grande longueur des brins axiaux 34 de la demi-phase interne 38I.

Comme représenté à la figure 13, la hauteur axiale "HE" du chignon externe 40E est telle que les brins transversaux 36I -de la demi-phase interne 38I s'étendent au droit de la culasse 28 du corps 10, sensiblement sur un même cercle que les brins transversaux 36E de la demi-phase externe 38E.

De manière à obtenir ce résultat, la hauteur axiale "HI" des chignons internes 40I est égale à la hauteur axiale des chignons externes 40E augmentée sensiblement de l'épaisseur radiale occupée par les brins axiaux 34 de la demi-phase externe 38E dans chaque encoche associée 20.

Ainsi, lorsque les chignons 40E, 40I sont repoussés radialement vers l'extérieur, comme représenté à la figure 11 ainsi qu'aux figures 13 et 14, les encoches 20 sont parfaitement dégagées, mais aucun des chignons 40E, 40I ne dépasse radialement vers l'extérieur du corps du stator 10. Plus précisément, les chignons 40E et 401 sont à une même distance radiale des encoches 20.

Ainsi, le chignon externe 40E a une hauteur axiale telle que lorsqu'il est repoussé radialement, comme représenté à la figure 8, le chignon 40E est agencé axialement au droit de la culasse 28 du corps 10, libérant ainsi l'espace qui s'étend axialement à l'avant des encoches libres 20 de la paroi radiale avant.

L'invention a été décrite en référence à un procédé dans lequel les enroulements de phase 30a sont montés successivement l'un après l'autre dans le corps de stator 10. Cependant, l'invention est aussi applicable pour des procédés de montage -dans lesquels au moins deux enroulements de phase 30a, voire tous les enroulements de phase 30a, sont montés simultanément dans le corps de stator 10.

## Revendications

1. Stator (11) de machine électrique tournante, notamment alternateur ou alterno-démarreur pour véhicule automobile, comportant :
- un corps cylindrique annulaire (10) comportant des encoches axiales (20) qui débouchent axialement dans les parois d'extrémité axiales avant (16) et arrière (18) du corps (10) et qui sont ouvertes radialement dans la paroi cylindrique interne (12) du corps (10) ;
- au moins un enroulement de phase (30) qui comporte des spires (32) ondulées de fil (33) qui comportent une série de brins axiaux (34) qui sont reçus dans une série d'encoches (20) associées et des brins de liaisons (36E, 361) qui relient les brins axiaux (34) successifs en s'étendant alternativement en saillie par rapport à la paroi d'extrémité axiale arrière (18) et en saillie par rapport à la paroi d'extrémité axiale avant (16) ;
- au moins un enroulement de phase (30) comporte une première demi-phase externe (38E) formant une première strate externe de spires (32) qui est reçue en fond d'encoche, et une deuxième demi-phase interne (38I) formant une deuxième strate interne de spires (32) qui sont superposées radialement, les brins de liaison (36E) de la première demi-phase externe (38E) formant des chignons externes (40E) et les brins de liaison (361) de la deuxième demi-phase interne (38I) formant des chignons internes (40I), les chignons internes (40I) et externes (40E) s'étendant axialement en saillie par rapport aux parois d'extrémités axiales avant (16) et arrière (18) du corps (10) les spires (32) de chaque demi-phase (38E, 38I) étant ondulées en opposition.
**caractérisé en ce que** pour chaque enroulement de phase (30), la longueur de fil (33) de chaque spire (32) de la demi-phase interne (38I) est plus grande que la longueur de fil (33) de chaque spire (32) de la demi-phase externe (38E) et **en ce que** les chignons internes et les chignons externes sont repoussés radialement vers l'extérieur et **en ce que** lorsqu'un enroulement de phase (50) est monté sur le corps de stator (10), des chignons internes (401) ont une hauteur axiale (HI) en saillie plus grande que la hauteur axiale (HE) des chignons externes (40E) avant que les chignons internes et externes ne soient repoussés radialement vers l'extérieur.

2. Stator (11) selon la revendication précédente, **caractérisé en ce que** la hauteur axiale (HI) en saillie des chignons internes (401) et des chignons externes (40E) est telle que les chignons (40E, 401) sont repliés radialement vers la périphérie externe du corps de stator (10) de manière à dégager les extrémité axiale débouchantes (22, 24) des encoches intermédiaires (20) qui ne font pas partie de la série d'encoches associées (20) audit enroulement (30).

3. Stator (11) selon la revendication précédente, **caractérisé en ce que** la hauteur axiale (HE) en saillie des chignons externes (40E) avant d'être repoussés est sensiblement égale à la hauteur axiale (HI) des chignons internes (40I) augmentée d'une hauteur globalement égale à l'épaisseur radiale occupée par les brins axiaux (34) de la demi-phase externe (38E) dans chaque encoche (20) associée.

4. Stator (11) selon l'une quelconque des revendications précédentes, **caractérisé en ce qu'**il comporte six enroulements de phase (30), et **en ce que** deux encoches successives (20) de chaque série sont espacées de cinq encoches (20) intermédiaires adjacentes.

5. Stator (11) selon l'une quelconque des revendications 1 à 4, **caractérisé en ce qu'**il comporte trois enroulements de phase (30), et **en ce que** deux encoches (20) successives de chaque série sont espacées de deux encoches adjacentes (20).

6. Enroulement de phase (50) destiné à être monté par déformation axiale sur un corps de stator (10) pour l'obtention d'un stator (11) selon l'une quelconque des revendications 1 à 6, du type dans lequel l'enroulement de phase (50) comporte une superposition axiale de spires (52) en forme d'étoiles régulières, chaque spire (52) comportant des brins radiaux (62) de même longueur et des brins de liaison transversaux internes (561) et externes (56E), du type dans lequel les brins radiaux (62) sont destinés à être reçus dans les encoches axiales (20) du corps de stator (10) pour former les brins axiaux (34) de l'enroulement (30) monté, tandis que les brins de liaison transversaux (56E, 561) sont destinés à former les chignons (40E, 40I) de l'enroulement monté (30), et du type dans lequel l'enroulement de phase (50) comporte une première demi-phase arrière (58B), formant une strate arrière de spires (52), et une deuxième demi-phase avant (58A) formant une strate avant de spires (52), la demi-phase avant (58A) étant destinée à former la demi-phase externe (38E) de l'enroulement monté (30) et la demi-phase arrière (58B) étant destinée à former la demi-phase interne (38E) de l'enroulement monté (30),
**caractérisé en ce que** la longueur de fil (33) de chaque spire (52) de la demi-phase arrière (58B) est plus grande que la longueur de fil de chaque spire (52) de la demi-phase avant (58A) et que les spires (32) de chaque demi-phase (38E, 38I) sont ondulées en opposition.

7. Enroulement (50) selon la revendication précédente, **caractérisé en ce que** la longueur de fil (33) de chaque spire (52) de la demi-phase arrière (58B) est plus grande de 2% à 10% par rapport à la longueur de fil de chaque spire (52) de la demi-phase avant (58A).

8. Enroulement (50) selon l'une quelconque des revendications 6 ou 7, **caractérisé en ce que** la longueur de fil (33) de chaque spire (52) de la demi-phase arrière (58B) est égale à la longueur de fil (33) de chaque spire (52) de la demi-phase avant (58A) globalement augmentée de l'épaisseur axiale de la demi-phase avant (58A) multipliée par le nombre de brins radiaux (62).

9. Enroulement (50) selon la revendication précédente, **caractérisé en ce que** chaque brin radial (62) de chaque spire (52) de la demi-phase arrière (58B) est égale à la longueur d'un brin radial (62) d'une des spires (52) de la demi-phase avant (58A) augmentée de l'épaisseur axiale de la demi-phase arrière (58B).

10. Enroulement (50) selon l'une quelconque des revendications 8 à 9, **caractérisé en ce que** le contour en étoile de la demi-phase avant (58A) est décalé angulairement autour de l'axe central (A) par rapport au contour en étoile de la demi-phase arrière (58B) de manière que les branches de l'étoile supérieure s'étendent radialement entre deux branches de l'étoile inférieure.

11. Enroulement (50) selon l'une quelconque des revendications 6 à 10, **caractérisé en ce que** les deux demi-phases (58A, 58B) sont enroulées dans un sens inverse l'une par rapport à l'autre.

## Patentansprüche

1. Stator (11) einer drehenden elektrischen Maschine, insbesondere eines Wechselstromgenerators oder Startergenerators für ein Kraftfahrzeug, der aufweist:
- einen ringförmigen zylindrischen Körper (10), der axiale Kerben (20) aufweist, die axial in die vorderen (16) und hinteren axialen Endwände (18) des Körpers (10) münden, und die radial in der inneren zylindrischen Wand (12) des Körpers (10) offen sind;
- mindestens eine Phasenwicklung (30), die gewellte Windungen (32) eines Drahts (33) aufweist, die eine Reihe von axialen Strängen (34), die in einer Reihe von zugeordneten Kerben (20) aufgenommen werden, und Verbindungsstränge (36E, 361) aufweisen, die die aufeinanderfolgenden axialen Stränge (34) verbinden, indem sie sich abwechselnd bezüglich der hinteren axialen Endwand (18) und bezüglich der vorderen axialen Endwand (16) vorstehend erstrecken;
- mindestens eine Phasenwicklung (30) aufweisend eine erste externe Halbphase (38E), die eine erste externe Lage von Windungen (32) formt, die am Kerbenboden aufgenommen wird, und eine zweite interne Halbphase (381), die eine zweite interne Lage von Windungen (32) formt, die radial übereinander angeordnet sind, wobei die Verbindungsstränge (36E) der ersten externen Halbphase (38E) externe Schaltenden (40E) formen, und die Verbindungsstränge (361) der zweiten internen Halbphase (381) interne Schaltenden (401) formen, wobei die internen (401) und externen Schaltenden (40E) sich axial bezüglich der vorderen (16) und hinteren (18) axialen Endwände des Körpers (10) vorstehend erstrecken, wobei die Windungen (32) jeder Halbphase (38E, 381) gegenphasig gewellt sind,
**dadurch gekennzeichnet, dass** für jede Phasenwicklung (30) die Drahtlänge (33) jeder Windung (32) der internen Halbphase (38I) größer ist als die Drahtlänge (33) jeder Windung (32) der externen Halbphase (38E), und dass die internen Schaltenden und die externen Schaltenden radial nach außen gedrückt werden, und dass, wenn eine Phasenwicklung (50) auf den Statorkörper (10) montiert wird, interne Schaltenden (40I) eine vorstehende axiale Höhe (HI) haben, die größer ist als die axiale Höhe (HE) der externen Schaltenden (40E), ehe die internen und externen Schaltenden radial nach außen gedrückt werden.

2. Stator (11) nach dem vorhergehenden Anspruch, **dadurch gekennzeichnet, dass** die vorstehende axiale Höhe (HI, HE) der internen Schaltenden (401) und der externen Schaltenden (40E) so ist, dass die Schaltenden (40E, 401) radial zum Außenumfang des Statorkörpers (10) umgebogen werden, um die mündenden axialen Enden (22, 24) der Zwischenkerben (20) freizulegen, die nicht Teil der Reihe von der Wicklung (30) zugeordneten Kerben (20) sind.

3. Stator (11) nach dem vorhergehenden Anspruch, **dadurch gekennzeichnet, dass** die vorstehende axiale Höhe (HE) der externen Schaltenden (40E), ehe sie zurückgedrückt werden, im Wesentlichen gleich der axialen Höhe (HI) der internen Schaltenden (401), erhöht um eine Höhe global gleich der von den axialen Strängen (34) der externen Halbphase (38E) in jeder zugeordneten Kerbe (20) eingenommenen radialen Dicke, ist.

4. Stator (11) nach einem der vorhergehenden Ansprüche, **dadurch gekennzeichnet, dass** er sechs Phasenwicklungen (30) aufweist, und dass zwei aufeinanderfolgende Kerben (20) jeder Reihe um fünf benachbarte Zwischenkerben (20) beabstandet sind.

5. Stator (11) nach einem der Ansprüche 1 bis 4, **dadurch gekennzeichnet, dass** er drei Phasenwicklungen (30) aufweist, und dass zwei aufeinanderfolgende Kerben (20) jeder Reihe um zwei benachbarte Kerben (20) beabstandet sind.

6. Phasenwicklung (50), die dazu bestimmt ist, durch axiale Verformung auf einen Statorkörper (10) zum Erhalt eines Stators (11) nach einem der Ansprüche 1 bis 5 montiert zu werden, von der Art, bei der die Phasenwicklung (50) eine axiale Stapelung von Windungen (52) in Form von gleichmäßigen Sternen aufweist, wobei jede Windung (52) radiale Stränge (62) gleicher Länge und interne (561) und externe (56E) Querverbindungsstränge aufweist, von der Art, bei der die radialen Stränge (62) dazu bestimmt sind, in den axialen Kerben (20) des Statorkörpers (10) aufgenommen zu werden, um die axialen Stränge (34) der montierten Wicklung (30) zu formen, während die Querverbindungsstränge (56E, 561) dazu bestimmt sind, die Schaltenden (40E, 401) der montierten Wicklung (30) zu formen, und von der Art, bei der die Phasenwicklung (50) eine erste hintere Halbphase (58B), die eine hintere Lage von Windungen (52) formt, und eine zweite vordere Halbphase (58A) aufweist, die eine vordere Lage von Windungen (52) formt, wobei die vordere Halbphase (58A) dazu bestimmt ist, die externe Halbphase (38E) der montierten Wicklung (30) zu formen, und die hintere Halbphase (58B) dazu bestimmt ist, die interne Halbphase (381) der montierten Wicklung (30) zu formen,
**dadurch gekennzeichnet, dass** die Drahtlänge (33) jeder Windung (52) der hinteren Halbphase (58B) größer ist als die Drahtlänge jeder Windung (52) der vorderen Halbphase (58A), und dass die Windungen (32) jeder Halbphase (38E, 381) gegenphasig gewellt sind.

7. Wicklung (50) nach dem vorhergehenden Anspruch, **dadurch gekennzeichnet, dass** die Drahtlänge (33) jeder Windung (52) der hinteren Halbphase (58B) zwischen 2% und 10% größer ist als die Drahtlänge jeder Windung (52) der vorderen Halbphase (58A).

8. Wicklung (50) nach einem der Ansprüche 6 oder 7, **dadurch gekennzeichnet, dass** die Drahtlänge (33) jeder Windung (52) der hinteren Halbphase (58B) gleich der Drahtlänge (33) jeder Windung (52) der vorderen Halbphase (58A), global um die axiale Dicke der vorderen Halbphase (58A) multipliziert mit der Anzahl von radialen Strängen (62) erhöht, ist.

9. Wicklung (50) nach dem vorhergehenden Anspruch, **dadurch gekennzeichnet, dass** jeder radiale Strang (62) jeder Windung (52) der hinteren Halbphase (58B) gleich der Länge eines radialen Strangs (62) einer der Windungen (52) der vorderen Halbphase (58A), erhöht um die axiale Dicke der hinteren Halbphase (58B), ist.

10. Wicklung (50) nach einem der Ansprüche 8 bis 9, **dadurch gekennzeichnet, dass** der sternförmige Umfang der vorderen Halbphase (58A) winkelmäßig um die Mittelachse (A) bezüglich des sternförmigen Umfangs der hinteren Halbphase (58B) versetzt ist, damit die Zacken des oberen Sterns sich radial zwischen zwei Zacken des unteren Sterns erstrecken.

11. Wicklung (50) nach einem der Ansprüche 6 bis 10, **dadurch gekennzeichnet, dass** die zwei Halbphasen (58A, 58B) in zueinander entgegengesetzter Richtung gewickelt sind.

## Claims

1. Stator (11) for a rotating electrical machine, in particular an alternator or alternator-starter for a motor vehicle, comprising:
- an annular cylindrical body (10) comprising axial slots (20) which open in the axial direction into the front (16) and rear (18) axial end walls of the body (10) and which are open in the radial direction into the internal cylindrical wall (12) of the body (10);
- at least one phase winding (30) which comprises undulating turns (32) of wire (33) which comprise a series of axial strands (34) which are received in a series of associated slots (20) and connection strands (36E, 361), which connect the successive axial strands (34), projecting alternately from the rear axial end wall (18) and from the front axial end wall (16);
- at least one phase winding (30) which comprises a first, external half-phase (38E) forming a first, external layer of turns (32) which is received at the bottom of a slot, and a second, internal half-phase (381) forming a second, internal layer of turns (32) which are superposed in the radial direction, the connection strands (36E) of the first, external half-phase (38E) forming external bundles (40E) and the connection strands (36I) of the second, internal half-phase (38I) forming internal bundles (40I), the internal bundles (40I) and external bundles (40E) projecting in the axial direction from the front (16) and rear (18) axial end walls of the body (10), wherein the turns (32) of each half-phase (38E, 381) undulate in opposite directions;
**characterized in that**, for each phase winding (30), the length of wire (33) of each turn (32) of the internal half-phase (381) is greater than the length of wire (33) of each turn (32) of the external half-phase (38E), and **in that** the internal and external bundles are pushed radially outwards, and **in that**, when a phase winding (50) is mounted on the stator body (10), internal bundles (401) have a greater projecting axial height (HI) than the axial height (HE) of the external bundles (40E) before the internal and external bundles are pushed radially outwards.

2. Stator (11) according to the preceding claim, **characterized in that** the projecting axial height (HI, HE) of the internal bundles (40I) and of the external bundles (40E) is such that the bundles (401, 40E) are bent back in the radial direction towards the outer periphery of the stator body (10) so as to free up the open axial ends (22, 24) of the intermediate slots (20) which are not included in the series of slots (20) associated with said winding (30).

3. Stator (11) according to the preceding claim, **characterized in that** the projecting axial height (HE) of the external bundles (40E), before these are bent back, is substantially equal to the axial height (HI) of the internal bundles (40I), increased by a height largely equal to the radial thickness taken up by the axial strands (34) of the external half-phase (38E) in each associated slot (20).

4. Stator (11) according to any one of the preceding claims, **characterized in that** it comprises six phase windings (30) and **in that** two successive slots (20) of each series are spaced apart by five adjacent intermediate slots (20).

5. Stator (11) according to any one of Claims 1 to 4, **characterized in that** it comprises three phase windings (30) and **in that** two successive slots (20) of each series are spaced apart by two adjacent slots (20).

6. Phase winding (50) designed to be mounted by axial deformation onto a stator body (10) in order to obtain a stator (11) according to any one of Claims 1 to 5, of the type in which the phase winding (50) comprises an axial superposition of turns (52) in the form of regular stars, each turn (52) comprising radial strands (62) of identical length and internal (561) and external (56E) transverse connection strands, of the type in which the radial strands (62) are designed to be received in the axial slots (20) of the stator body (10) to form the axial strands (34) of the mounted winding (30) whereas the transverse connection strands (56E, 561) are designed to form the bundles (40E, 401) of the mounted winding (30), and of the type in which the phase winding (50) comprises a first, rear half-phase (58B) forming a rear layer of turns (52), and a second, front half-phase (58A) forming a front layer of turns (52), the front half-phase (58A) being designed to form the external half-phase (38E) of the mounted winding (30) and the rear half-phase (58B) being designed to form the internal half-phase (381) of the mounted winding (30),
**characterized in that** the length of wire (33) of each turn (52) of the rear half-phase (58B) is greater than the length of wire of each turn (52) of the front half-phase (58A) and that the turns (32) of each half-phase (38E, 381) undulate in opposite directions.

7. Winding (50) according to the preceding claim, **characterized in that** the length of wire (33) of each turn (52) of the rear half-phase (58B) is 2% to 10% greater than the length of wire of each turn (52) of the front half-phase (58A).

8. Winding (50) according to either of Claims 6 and 7, **characterized in that** the length of wire (33) of each turn (52) of the rear half-phase (58B) is equal to the length of wire (33) of each turn (52) of the front half-phase (58A), increased overall by the axial thickness of the front half-phase (58A) multiplied by the number of radial strands (62).

9. Winding (50) according to the preceding claim, **characterized in that** each radial strand (62) of each turn (52) of the rear half-phase (58B) is equal to the length of one radial strand (62) of one of the turns (52) of the front half-phase (58A), increased by the axial thickness of the rear half-phase (58B).

10. Winding (50) according to either of Claims 8 and 9, **characterized in that** the star-shaped contour of the front half-phase (58A) is angularly offset about the central axis (A) with respect to the star-shaped contour of the rear half-phase (58B), such that the arms of the upper star extend radially between two arms of the lower star.

11. Winding (50) according to any one of Claims 6 to 10, **characterized in that** the two half-phases (58A, 58B) are wound in opposite senses with respect to one another.
